# EUROPEAN PATENT APPLICATION

(11) **EP 1 449 738 A2**
(43) Date of publication of application: **25.08.2004**
(21) Application number: 04075361.8
(22) Date of filing: 04.02.2004
(51) Int. Cl.: B62B 3/02

(54) **Foldable and nestable roll container**

(30) Priority: 21.02.2003 NL 1022751
(71) Applicant: Hoza B.V., 9679 ZG Scheemda (NL)
(72) Inventor: Leeuwen, Klaas van, 9679 TC Scheemda (NL); Vries, Wim de, 9679 TC Scheemda (NL)

(57) **Abstract**

The invention relates to a foldable, nestable roll container. The roll container consists of a trapezial wheeled bottom frame (1), on a short side of which a first sideframe (2) is rigidly mounted. To the first sideframe (2), other sideframes (12a,12b,15,23,24) are hingedly mounted that completely enclose the roll container in an unfolded situation. The sideframes (12a,12b, 23,24) of the longest sides are split-up in two parts, which may be positioned against the fixed first sideframe (2), without reaching out, when the roll container is in a folded situation.

## Description

The invention relates to a roll container, comprising a bottom frame, on an underside provided with wheels and on top provided with sideframes in which shelves may be placed.

Roll containers of this type are known. They are used for example for transporting flowers and plants and the like to shops or to transshipment companies. Often, the roll containers are transported over large distances. The transport back to the producer is a significant cost factor. For that reason, known roll containers are made so that they may be disassembled, so that once empty they may be transported as compact stacks of bottom frame's, sideframes and shelves, which keeps the transportation costs acceptable. The disadvantage of the known roll containers is that disassembling them, but more in particular assembling them again is a tiresome and time consuming job.

The roll container according to the invention obviates this disadvantage and is characterised in that a first sideframe is rigidly mounted to a first side of the bottom frame, that a bottom is hingedly mounted to the first side of the bottom frame and/or to the first sideframe and that further sideframes are hingedly mounted to the first sideframe, in such a way that in an unfolded situation of the roll container the sideframes surround at least substantially completely an outline of the swung down bottom and that in a folded situation of the roll container the sideframes may be folded at least substantially against the swung up bottom and/or against the first sideframe. The volume of a roll container constructed in this way may be reduced to a minimum by in one single movement, once the shelves have been removed.

A favourable embodiment of the inventive roll container, with which the volume of a number of roll containers may be reduced even more, is characterised in that the bottom frame comprises an at least substantially trapezial tubular frame, of which a longest parallel side forms the first side and that the bottom frame is shaped such that it, with the roll container in a folded situation, may be nested inside a bottom frame of a second roll container, so that the folded roll containers may be transported in a nested situation. Beneath the longest parallel side, two preferably fixed wheels are mounted while under the shortest parallel side two swivelling wheels are mounted, with which a direction of the roll container can be determined which is generally speaking from the longest parallel side in the direction of the shortest parallel side.

In the known roll container, rectangular shelves are used and the roll containers are loaded and unloaded from a long side. A favourable embodiment for which the existing shelves may be used in the inventive roll container, which would simplify the introduction of the inventive roll container substantially, is characterised in that the bottom is at least substantially rectangular shaped and that the first side is shorter than a second side, adjacent to the first side.

A further favourable embodiment, with which a compartment is created in a simple manner within which the swung up bottom and the folded sideframes may be stored is characterised in that the first sideframe partly extends beyond a corner formed by the first and the second side.

Such a roll container according to the invention which can be manufactured in a simple manner is characterised in that a second sideframe is hingedly mounted to a part of the first sideframe that extends along the second side, that a third sideframe is hingedly mounted to this second sideframe and that a fourth sideframe is hingedly mounted to this third sideframe.

For the known roll container the second side is substantially longer than the first side. Therefore, without additional measures being taken, the second sideframe would stick out when the roll container is brought into the folded situation. A favourable embodiment which substantially obviates this disadvantage is characterised in that the second sideframe comprises two mutually hingedly connected sub sideframes which, when folded, do not stick out of the roll container.

A favourable embodiment according to another aspect of the invention, which enables one in a very elegant manner to load and unload the roll container from a long side is characterised in that in an unfolded situation of the roll container the fourth sideframe extends over at last substantially half the fourth side and that a fifth sideframe, which is hingedly mounted to the first sideframe, extends over a complementary part of the fourth side. The fourth and the fifth side form so to speak two short doors, with which the entire side of the roll container may be made accessible.

A further favourable embodiment is characterised in that a shortest parallel side of the bottom frame is on an outside provided with at least one projection, rising above the bottom frame, which limits the freedom of movement of the third sideframe in an outward direction. Preferably, the shortest parallel side of the bottom frame is in the operating position lower positioned than the longest parallel side. The shortest parallel side of the bottom frame is preferably placed lower, in such a way that at least one projection may pass the folded sideframes of its predecessor when the roll containers are being nested.

The invention will now be further explained with a reference to the following figures, in which:
- Fig. 1: represents a possible embodiment of the inventive roll container seen from a first side;
- Fig. 2: represents this roll container seen from a second side;
- Fig. 3: represents this roll container seen from a third side;
- Fig. 4: represents this roll container seen from a fourth side;
- Fig. 5: represents this roll container in a folded situation in top view;
- Fig. 6: represents this roll container in an unfolded situation in top view;
- Fig. 7A: represents a shelf in top view;
- Fig. 7B: represents this shelf in front view;
- Fig. 7C: represents a metal strip provided with indica in front view.

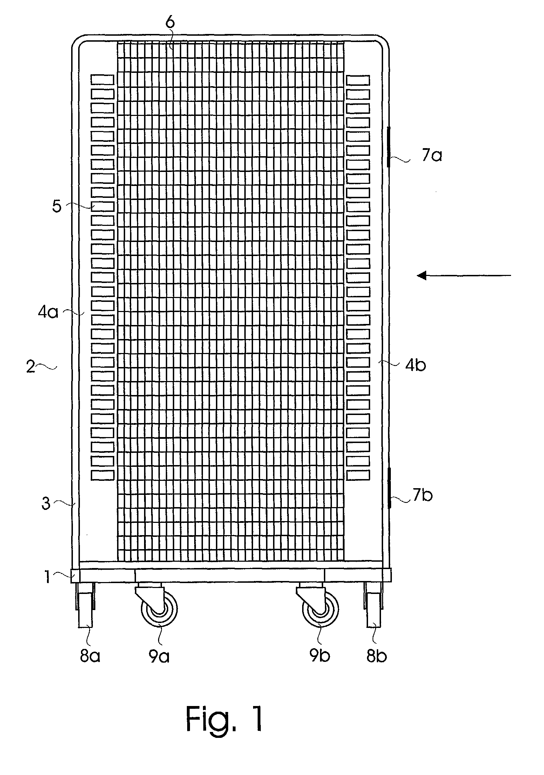

Fig. 1 schematically represents a possible embodiment of the inventive roll container seen from a first side, consisting of a trapezial bottom frame 1, of which the longest parallel side is missing. On the free ends of bottom frame 1, a first sideframe 2 is mounted consisting of a tubular profile 3, inside of which two metal strips 4a,4b are mounted in which holes 5 have been made in which known shelves, not shown here, can be mounted. Within strips 4a,4b extends a metal mesh 6, the mesh size of which has been selected so that for example flowers cannot slip through it. In this figure, the load and unload direction is indicated by an arrow. In order to enable this loading and unloading, a fifth sideframe, not visible in this figure, is attached to tubular profile 3 with hinges 7a,7b. Below bottom frame 1 and near first sideframe 2, two fixed wheels 8a,8b are placed and near the ends of the shortest parallel side two swivelling wheels 9a,9b.

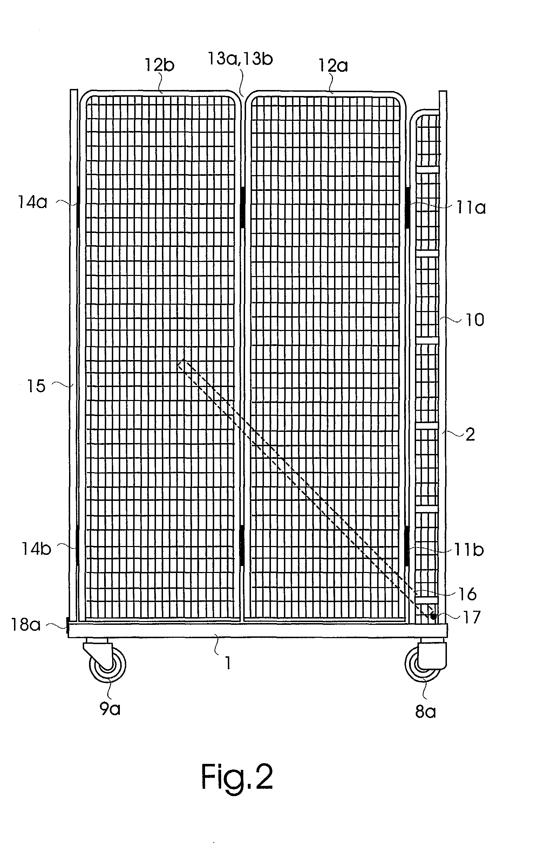

Fig. 2 represents this roll container seen from a second side, with bottom frame 1 and first sideframe 2, to which an extension 10 is rigidly mounted which extends over a short length along the second side and to which a second sideframe is mounted with two hinges 11a,11b, consisting of two sub sideframes 12a,12b which are mutually hingedly connected by two hinges 13a,13b. A third sideframe 15, extending along a third side, is connected to second sub sideframe 12b with two hinges 14a,14b. Sub sideframes 12a,12b consist of a tubular profile within which a fine metal mesh extends. Bottom 16, which is connected to first sideframe 2 with a hinge 17, and which is here in a situation between a swung up position and a swung down position, is indicated by a dotted line. To the shortest parallel side of bottom frame 1, two projections 18a,18b are fixed, which limit the outward movement of third sideframe 15.

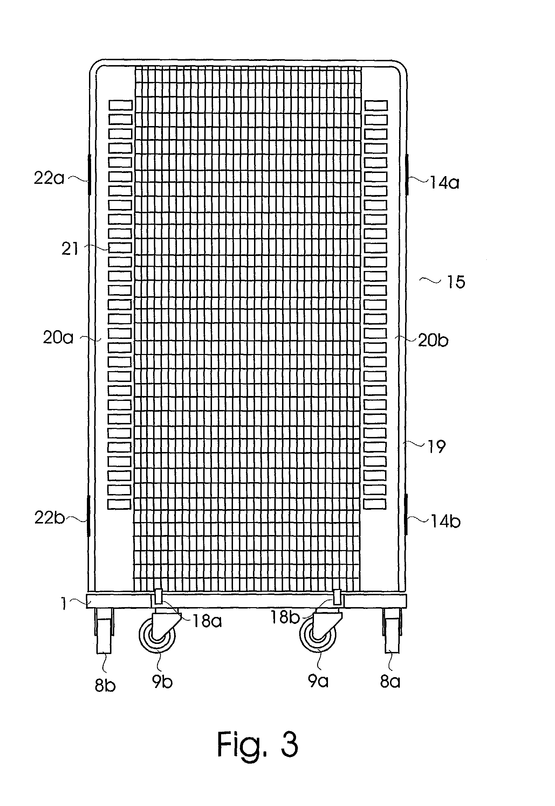

Fig. 3 represents this roll container seen from a third side, with third sideframe 15 which is mounted to second sub sideframe 12b with hinges 14a,14b. Third sideframe 15 consists of a tubular profile 19, inside of which two metal strips 20a,20b mounted, in which holes 5 have been made in which known shelves, not shown here, can be mounted. Within strips 20a,20b extends a metal mesh 6. A fourth sideframe 23, not visible in this figure and extending along a fourth side, is mounted with two hinges 22a,22b to third sideframe 15.

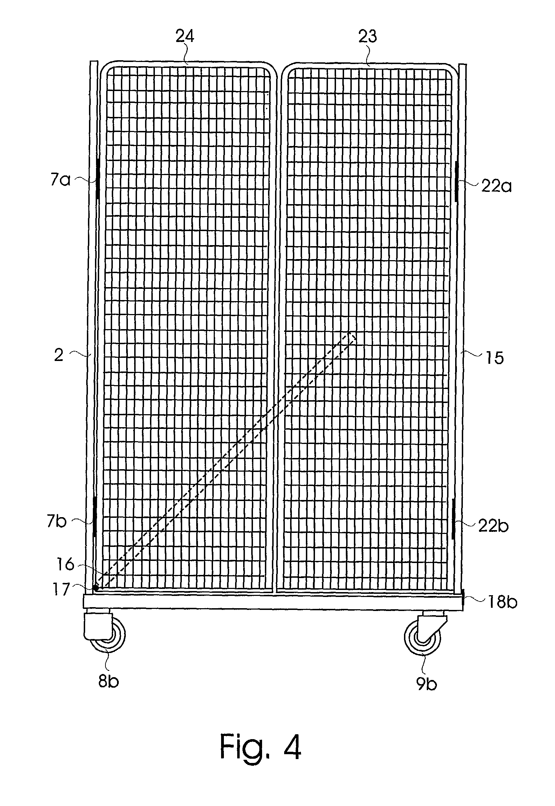

Fig. 4 represents this roll container seen from a fourth side, with bottom frame 1, third sideframe 15, to which fourth sideframe 23 is mounted with hinges 22a,22b which extends along a part of the fourth side, for example half the length, and first sideframe 2, to which the fifth sideframe 24 is connected with hinges 7a,7b. Bottom 16, which is connected to first sideframe 2 with a hinge 17, is indicated by a dotted line. With bottom 16 in the swung down position, all sideframes are fixed from the inside. The third sideframe 15 is also fixed from the outside, with the aid of projections 18a,18b fixed on the edge of bottom frame 1. The fourth sideframe and the fifth sideframe can be unfolded outwards, so that the roll container may be loaded and unloaded unhindered from the fourth side.

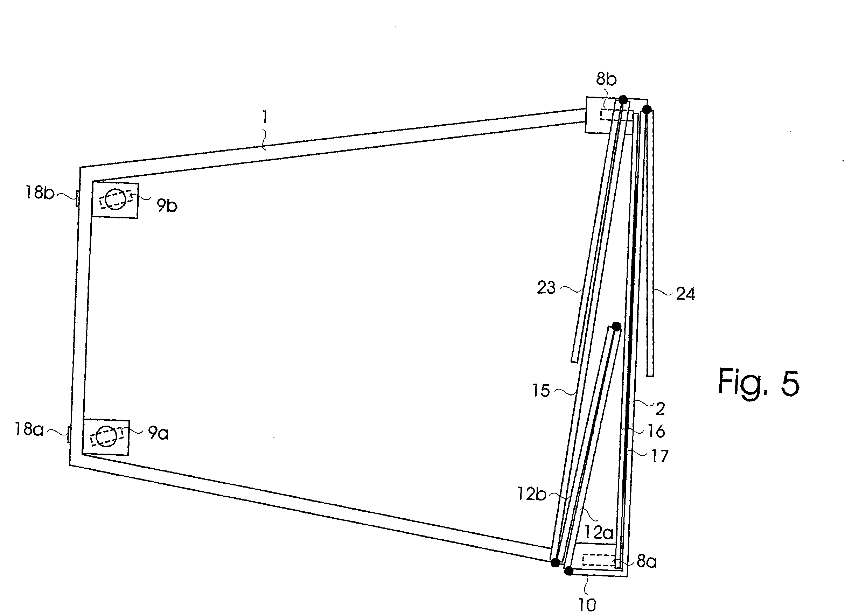

Fig. 5 represents this roll container in a folded situation in top view, with bottom frame 1, the rigidly mounted first sideframe 2 with extension 10, to which the first sub sideframe 12a, second sub sideframe 12b, third sideframe 15 and fourth sideframe 23 are hingedly mounted one after the other. Moreover the fifth sideframe 24 and bottom 16 are hingedly mounted to first sideframe 2. Finally, the fixed wheels 8a,8b, the two swivelling wheels 9a,9b and the projections 18a,18b are visible.

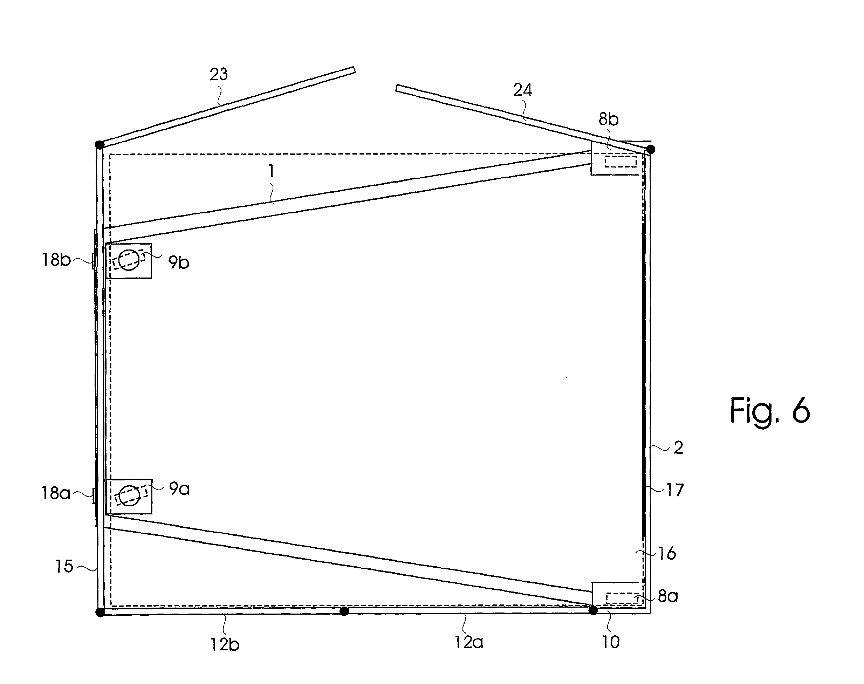

Fig. 6 represents this roll container in an unfolded situation in top view, with bottom frame 1, the rigidly mounted first sideframe 2 with extension 10, to which the first sub sideframe 12a, second sub sideframe 12b, third sideframe 15 and fourth sideframe 23 are mounted one after the other. Moreover the fifth sideframe 24 and bottom 16, indicated with a dotted line for clarity reason, are mounted to first sideframe 2.

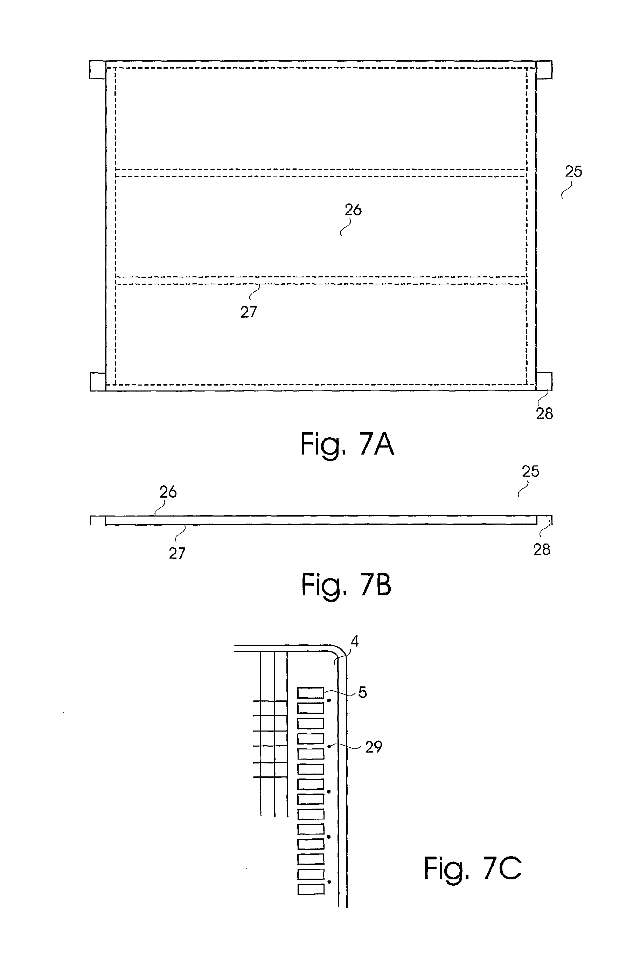

Fig. 7A represents a shelf 25 in top view, which may be used in existing roll containers and in the inventive roll container. Shelf 25 consists if a light plate 26, made of for example multiplex, underneath of which a number of reinforcing strips 27 have been mounted. On its four corners, shelf 25 is provided with four hooks 28, that may be hooked in holes 5 in metal strips 4.

Fig. 7B represents this shelf 25 in front view, with plate 26, reinforcing strips 27 and hooks 28.

Fig. 7C represents a metal strip 4 in front view, provided with holes 5 in which hooks 28 of a number of shelves 25 may be hooked. In order to reduce the possibility that a shelf is placed out of true in the roll container, metal strip 4 is provided with indica 29, placed for example next to every fourth hole 5.

## Claims

1. Roll container, comprising a bottom frame, on an underside provided with wheels and on top provided with sideframes in which shelves may be placed, **characterised in that** a first sideframe is rigidly mounted to a first side of the bottom frame, that a bottom is hingedly mounted to the first side of the bottom frame and/or to the first sideframe and that further sideframes are hingedly mounted to the first sideframe, in such a way that in an unfolded situation of the roll container the sideframes surround at least substantially completely an outline of the swung down bottom and that in a folded situation of the roll container the sideframes may be folded at least substantially against the swung up bottom and/or against the first sideframe.

2. Roll container according to claim 1, **characterised in that** the bottom frame comprises an at least substantially trapezial tubular frame, of which a longest parallel side forms the first side and that the bottom frame is shaped such that it, with the roll container in a folded situation, may be nested inside a bottom frame of a second roll container.

3. Roll container according to claim 1 or 2, **characterised in that** the bottom is at least substantially rectangular shaped and that the first side is shorter than a second side, adjacent to the first side.

4. Roll container according to claim 3, **characterised in that** the first sideframe partly extends beyond a corner formed by the first and the second side.

5. Roll container according to claim 4, **characterised in that** a second sideframe is hingedly mounted to a part of the first sideframe that extends along the second side, that a third sideframe is hingedly mounted to this second sideframe and that a fourth sideframe is hingedly mounted to this third sideframe.

6. Roll container according to claim 5, **characterised in that** the second sideframe comprises two mutually hingedly connected sub sideframes.

7. Roll container according to claim 5 or 6, **characterised in that** in an unfolded situation of the roll container the fourth sideframe extends over at last substantially half the fourth side and that a fifth sideframe, which is hingedly mounted to the first sideframe, extends over a complementary part of the fourth side.

8. Roll container according to one of the claims 2 t/m 7, **characterised in that** a shortest parallel side of the bottom frame is on an outside provided with at least one projection, rising above the bottom frame.

9. Roll container according to claim 8, **characterised in that** the shortest parallel side is in the operating position lower positioned than the longest parallel side.
